# FASCICULE DE BREVET EUROPEEN

(11) **EP 1 821 032 B1**
(45) Date de publication et mention de la délivrance du brevet: **15.07.2009**
(21) Numéro de dépôt: 07290072.3
(22) Date de dépôt: 19.01.2007
(51) Int. Cl.: F21S 8/10

(54) **Projecteur, notamment à LED, pour véhicule automobile**
Scheinwerfer, insbesondere mit LED, für Kraftfahrzeug
Projector, in particular with an LED, for an automobile

(30) Priorité: 27.01.2006 FR 0600777
(43) Date de publication de la demande: 22.08.2007
(73) Titulaire: VALEO VISION, 93012 Bobigny Cedex (FR)
(72) Inventeur: Albou, Pierre, 75013 Paris (FR); Le Bars, Jean-François, 89275 Elchingen (DE)
(74) Mandataire: Renous Chan, Véronique

(56) Documents cités:
- FR-A- 2 868 510
- FR-A1- 2 759 765

## Description

La présente invention concerne plus particulièrement un projecteur de nouvelle génération où la source lumineuse est constituée par un ensemble de diodes électroluminescentes (LEDs) et la mise en oeuvre pratique de cette technologie dans un véhicule automobile.

Les dispositifs d'éclairage directionnels de type DBL (acronyme anglais de Dynamic Bending Light), ou de réglage automatique du niveau des faisceaux des projecteurs en fonction de l'assiette du véhicule de la catégorie LVL (acronyme anglais de Levelling of Vehicule Light), mettent en oeuvre des projecteurs capables d'engendrer un faisceau lumineux orientable.

On connaît des documents FR2760069, FR2770185, ou EP1527949 au nom de la demanderesse des projecteurs de ce type dont le réflecteur, ou, plus généralement, le module d'émission de lumière pivote sous l'effet de moyens d'actionnement dynamiques en fonction de différents paramètres.

Ces documents montrent des projecteurs équipés classiquement de lampes à décharge gazeuse, mais le document EP1527949 fait état d'un module d'émission de lumière comprenant au moins une diode électroluminescente.

En effet, grâce au développement de la technologie des diodes électroluminescentes, ou LEDs (acronyme anglais de Light Emitting Diode), hyper-lumineuses, celles-ci tendent à supplanter les autres types de sources dans les projecteurs de véhicules, compte tenu de leur rendement énergétique élevé.

Le document EP1598593, par exemple, décrit un tel projecteur elliptique à LEDs pour véhicules. Selon la structure habituelle du système catadioptrique de ce type de projecteur, la source lumineuse est placée en un premier foyer du réflecteur elliptique, tandis qu'une lame réfléchissante, dite « lame plieuse », destinée à assurer une répartition de l'énergie lumineuse dans le faisceau conforme aux normes, est agencée au second foyer. Le faisceau émergent du miroir est collimaté par une lentille asphérique dont le point focal correspond à ce second foyer.

Un des avantages de ce projecteur par rapport à un projecteur conventionnel est sa compacité résultant de l'utilisation de LEDs.

Cependant, à la différence du filament de tungstène d'une lampe à incandescence, ou du gaz d'une lampe à décharge, aucune LED existante ne résiste à une haute température, par exemple de 1000°C.

Or, il peut arriver dans certaines situations excessivement rares, mais pas totalement improbables, résultant d'un concours de circonstances exceptionnelles, que les rayons du soleil, suivant un chemin inverse de celui du faisceau émis par une LED, soient focalisés sur la puce de la diode, ou à proximité, sur son boîtier.

Des situations similaires sont connues dans le cas des projecteurs conventionnels dont les parties sombres (en général les collerettes d'encastrement) sont endommagées par la focalisation de la lumière du soleil.

Dans ces circonstances, alors que les effets sur une ampoule de l'alignement du soleil sur l'axe optique du projecteur sont très faibles, la LED est au contraire détruite par échauffement excessif.

Une solution connue à ce problème consiste à défocaliser les modules d'émission de lumière, mais cela interdit d'atteindre un maximum d'efficacité lumineuse.

Une autre solution consiste à interposer des caches, mais dans ce cas le rendement optique des modules est dramatiquement diminué.

Il existe donc un besoin pour une solution au problème de la protection d'un projecteur contre la possibilité d'échauffement par la lumière solaire d'éléments du projecteur, notamment les sources lumineuse, palliant les inconvénients des dispositifs ou procédés connus. Plus particulièrement, il existe un besoin pour une solution de protection d'un projecteur à LED contre la possibilité de destruction par la lumière solaire palliant les inconvénients des dispositifs ou procédés connus.

La présente invention vise plus particulièrement à résoudre ce problème pour un projecteur à LED du type de ceux comprenant au moins une diode électroluminescente placée à un premier foyer d'un premier système optique destiné à former un faisceau lumineux projeté selon un premier chemin optique.

Plus généralement, l'objet de la présente invention est un projecteur de véhicule automobile comprenant au moins une source lumineuse comprenant des moyens de détection de la focalisation de rayons solaires au voisinage d'un point d'un élément du module optique et, associés aux dits moyens de détection, des moyens de protection contre l'échauffement dudit élément du module optique par lesdits rayons solaires.

Selon un mode préférentiel de réalisation, la source lumineuse est placée à un premier foyer d'un premier système optique destiné à former un faisceau lumineux projeté selon un premier chemin optique. Dans ce cas, lesdits moyens de détection sont aptes à détecter la focalisation de rayons solaires au voisinage dudit premier foyer. Lesdits moyens de protection permettent de protéger ladite source lumineuse contre l'échauffement par lesdits rayons solaires. Préférentiellement lesdits moyens de détection sont aptes à détecter la focalisation au voisinage dudit premier foyer de rayons solaires suivant, au moins partiellement, un second chemin optique inverse dudit premier chemin optique.

Fort avantageusement, ces moyens de détection comprennent au moins une photodiode. Ils comprennent de préférence une photodiode placée au voisinage de l'image du premier foyer dans une lame semi-transparente agencée dans le second chemin optique.

Alternativement, ils comprennent préférentiellement une photodiode placée au voisinage de l'image du premier foyer dans un réflecteur dichroïque agencé dans le second chemin optique.

Mais en général, lorsque la source lumineurse est une diode électroluminescente, on tire bénéfice du fait que les moyens de détection comprennent la diode électroluminescente elle-même.

Selon un autre aspect de l'invention, les moyens de détection de la focalisation des rayons solaires comprennent au moins un capteur de température.

De préférence, lorsque la source lumineurse est une diode électroluminescente, ce capteur de température est une thermistance fixée sur le radiateur de la diode électroluminescente.

Alternativement, lorsque la source lumineurse est une diode électroluminescente, le capteur de température est avantageusement constitué par la diode électroluminescente elle-même.

Dans ce cas, la diode électroluminescente est alimentée par un courant présentant une composante alternative de faible amplitude aux fins de mesure de sa résistance dynamique.

Les moyens de détection prévus comprennent aussi avantageusement un capteur agencé au voisinage du point focal d'un second système optique aligné avec le premier système optique et ayant la même ouverture.

Parmi les autres moyens de détection prévus, ceux comprenant un capteur de soleil, de préférence multispectral, sont également avantageux.

Il en est de même de ceux comprenant une caméra vidéo.

Le projecteur à LED de véhicule automobile selon l'invention est aussi remarquable en ce que les moyens de protection comprennent au moins un actionneur électromécanique commandé en fonction des signaux fournis par les moyens de détection.

De préférence, ces moyens de protection comprennent au voisinage du premier foyer un cache mobile actionné par l'actionneur électromécanique.

Alternativement, le premier système optique est préférentiellement un système elliptique comportant une lame plieuse déplacée par l'actionneur.

Alternativement encore, le premier système optique est avantageusement un module d'émission de lumière sur lequel agit l'actionneur.

Dans ce dernier cas, l'actionneur électromécanique est remarquablement un correcteur de portée recevant une consigne de position élaborée par un calculateur de correction de portée en fonction d'informations comprenant les signaux fournis par les moyens de détection.

Ces informations comprennent de préférence l'état « mis » ou « coupé » du contact du véhicule.

En variante, le projecteur de véhicule automobile selon l'invention comprend avantageusement un volet agencé devant la pupille d'entrée du premier système optique et actionné par l'actionneur électromécanique commandé en fonction des signaux fournis par les moyens de détection.

Selon une variante d'un type similaire, le projecteur est escamotable à l'intérieur du véhicule sous l'action de cet actionneur.

Dans un autre mode de réalisation de l'invention, on tire aussi avantage, d'un projecteur de véhicule automobile remarquable en ce que les moyens de protection comprennent au moins un obturateur en matériau électrochrome agencé dans le second chemin optique et commandé en fonction des signaux fournis par les moyens de détection.

Il est à noter que dans chacun des modes et variantes de réalisations décrits dans cette demande, la ou les sources lumineuses peuvent être préférentiellement une diode électroluminescente.

Ces quelques spécifications essentielles auront rendu évidents pour l'homme de métier les avantages apportés par le projecteur à LED selon l'invention par rapport à l'état de la technique antérieur. Ces avantages sont d'autant plus bénéfiques dans le cas de projecteurs où les sources lumineuses employées ne résistent pas à de haute températures et peuvent être détruites par le rayonnement solaire, notamment dans le cas de projecteurs à LED.

Les spécifications détaillées de l'invention sont données dans la description qui suit en liaison avec les dessins ci-annexés. Il est à noter que ces dessins n'ont d'autre but que d'illustrer le texte de la description et ne constituent en aucune sorte une limitation de la portée de l'invention.

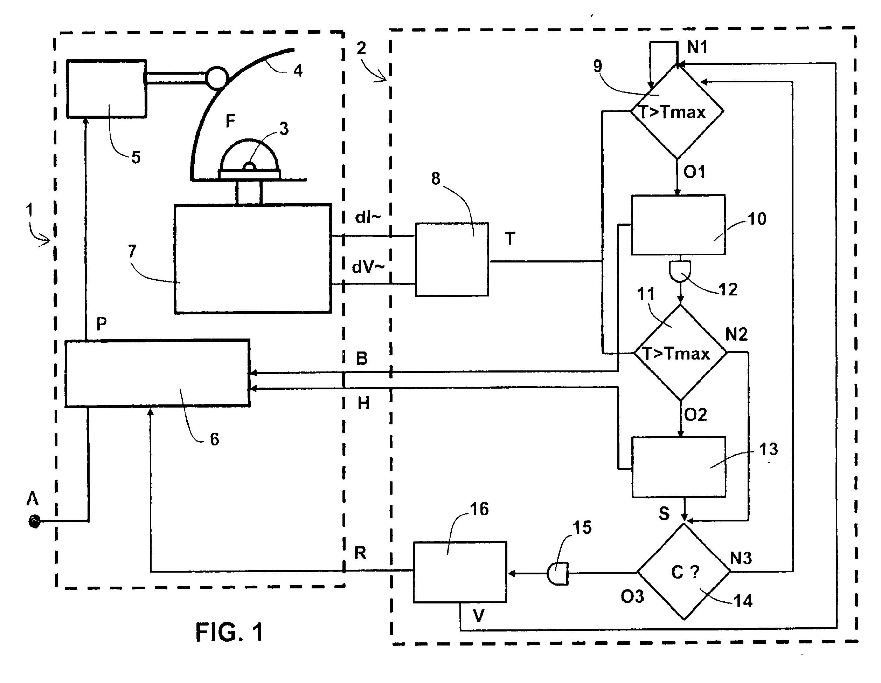

La **Figure 1** est un schéma synoptique général d'un projecteur à LED, selon un mode de réalisation préféré de l'invention, comportant un module d'émission de lumière actionné par un correcteur de portée en fonction d'informations comprenant la détection de la focalisation de rayons solaires à partir de la mesure de la résistance dynamique d'une diode électroluminescente.

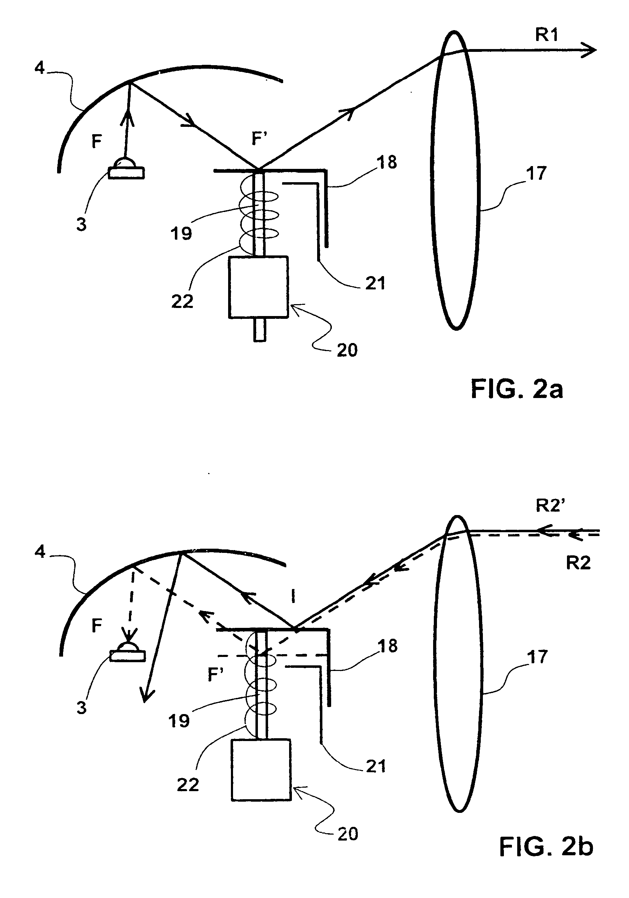

Les **Figures 2a et 2b** sont des vues schématiques montrant un projecteur à LED, selon un autre mode préféré de réalisation de l'invention, comprenant une lame « plieuse » respectivement en position de fonctionnement normal, et en position de protection de la diode en cas de détection de la focalisation de rayons solaires.

Selon un premier mode de réalisation préféré de l'invention, l'architecture d'un projecteur à LED représentée schématiquement sur la **Figure 1** présente un premier bloc fonctionnel 1, correspondant essentiellement à la structure d'un projecteur à LED de la catégorie LVL, et un second bloc fonctionnel 2 de détection de la focalisation des rayons solaires et de déclenchement des moyens de protection.

De manière connue en soi, la diode électroluminescente 3 (ou un ensemble de diodes électroluminescentes) est montée sur un support à un foyer F d'un miroir elliptique 4. Cet ensemble (ainsi que la lentille sphérique de collimation du faisceau et différents caches non représentés) constitue un module d'émission de lumière.

Ce module 3,4 est articulé sur le châssis du véhicule autour d'un axe horizontal, de manière à ce que son axe optique soit réglable en site sous l'action d'un actionneur électromécanique 5 commandé par un calculateur de portée 6. La consigne de position P est élaborée par le calculateur 6 en fonction des signaux A émis par les capteurs d'assiette du véhicule, et transitant par le bus embarqué.

La LED 3 (ou l'ensemble de LEDs) est alimentée par un bloc d'alimentation à courant continu 7.

Selon l'invention, une petite composante alternative dl- est injectée dans le courant d'alimentation par le bloc de détection 2, et la composante alternative dV~ de même fréquence est mesurée périodiquement dans la tension d'alimentation.

En utilisant une démodulation synchrone, ce procédé permet de mesurer la résistance dynamique dV/dl d'une diode 3 avec un très bon rapport signal sur bruit, même pour de très faibles niveaux.

La résistance dynamique dV/dl dépendant de manière connue, pour une même famille de diodes, de la température T de la puce de la diode 3, une routine de calcul 8 indépendante élabore cette température T à partir des mesures de dl~ et de dV~.

Un premier test de comparaison 9 de la température courante T à une valeur Tmax à ne pas dépasser est effectué périodiquement par le bloc de détection 2. Si la température courante T est inférieure à Tmax, c'est-à-dire si le premier test 9 est négatif N1, la diode ne coure aucun risque, et aucune action autre que ce même test est exécutée par le bloc de détection 2.

Dans le cas où la température courante T est supérieure à la température limite Tmax, c'est-à-dire si le premier test 9 est positif O1, une routine de commande 10 du bloc de détection 2 transmet une commande de mise en butée basse B au calculateur de correction de portée 6.

Dans l'hypothèse où l'échauffement de la diode 3 est dû à la focalisation inverse du soleil sur la puce, cette action changeant la direction de l'axe optique du module d'émission de lumière 3,4, est de nature à empêcher un maintien trop long de la diode dans un état critique.

Le résultat effectif de cet action est vérifié par l'exécution d'un second test de comparaison 11 de la température courante T de la diode 3 à la valeur Tmax par le bloc de détection 2 après un délai prédéterminé 12.

Dans le cas 02 où cette température T est encore supérieure à la température maximale Tmax admissible, cela signifie que la mise en butée basse du module d'émission de lumière 3,4 n'a pas eu le résultat escompté : les rayons du soleil ont été insuffisamment défocalisés par ce changement de direction de l'axe optique.

Une autre routine de commande 13 du bloc de détection 2 transmet une commande de mise en butée haute H au calculateur de correction de portée 6.

La mise en butée basse ou haute du correcteur de portée 5 est normalement suffisante pour sortir N2,S de la situation critique de surchauffe de la diode 3, car il suffit d'éloigner l'axe optique du module d'émission de lumière 3,4, au pire, d'un demi diamètre apparent du soleil.

La température courante T de la diode 3 étant redevenue inférieure à la température limite Tmax, le module de détection 2 vérifie 14 l'état du contact C du véhicule.

Dans le cas où le contact est « coupé » N3, la boucle de vérification 9,11 de la température courante T est reprise.

Dans le cas où le contact est « mis » 03, après un autre délai prédéterminé 15, le module de détection 2 transmet 16 au calculateur de correction de portée 6 une commande de reprise du fonctionnement normal R, et parallèlement la boucle de vérification 9,11 de l'état de la diode 3 est reprise V.

Ce premier mode de réalisation préféré de l'invention décrit ci-dessus présente donc l'avantage de mettre en oeuvre des moyens efficaces de détection de la focalisation des rayons solaires et de protection des LEDs en utilisant tous les éléments mécaniques 5, optiques 4 et électro-optiques 3 d'un projecteur à LED à correction de portée existant, et l'avantage supplémentaire d'offrir un contrôle de l'auto-échauffement de ces LEDs en régime de fonctionnement normal.

Mais l'invention ne concerne pas seulement les projecteurs de la catégorie LVL. Les **Figures 2a et 2b** montrent schématiquement un autre mode de réalisation préféré de l'invention dans lequel un projecteur comprend un miroir elliptique 4, au moins une diode électroluminescente 3 placé en un premier foyer F, une optique de collimation 17, et une lame plieuse 18 placée au second foyer F'. du miroir 4

La lame plieuse 18 est montée sur le noyau plongeur 19 d'un électroaimant 20. Quand l'électro-aimant 20 n'est pas excité (**Figure 2a**), la lame plieuse 18 est maintenue en contact avec une butée 21 par un ressort de rappel 22. De la sorte, quand le projecteur est allumé, un rayon lumineux émis par la diode 3 est réfléchi sur le miroir 4 et la lame plieuse 18 en suivant un premier chemin optique R1.

Dans certaines situations (soleil bas sur l'horizon et/ ou véhicule en côte, élément du paysage urbain réfléchissant...), alors que le projecteur est éteint, les rayons du soleil peuvent suivre un second chemin optique R2 inverse du premier chemin optique R1, du moins partiellement (**Figure 2b**).

Dans ces situations, si la lame plieuse 18 restait en butée, les rayons du soleil passant par le second foyer F' seraient focalisés au premier foyer F du miroir 4, c'est-à-dire sur la diode 3, et détruiraient celle-ci par échauffement excessif.

L'excitation de l'électro-aimant, sur commande des moyens de détection de l'échauffement de la diode, déplace le point d'incidence I des rayons solaires sur la lame plieuse 18 en un point différent du second foyer F' du miroir 4. De la sorte, les rayons du soleil suivent un autre chemin optique R2', différent du second chemin optique R2 inverse du premier chemin optique R1 des rayons lumineux émis par la diode 3. Le système optique 4,17,18 du projecteur forme donc l'image du soleil en dehors de la puce de la diode électroluminescente 3, qui est ainsi protégée de la destruction.

Comme il va de soi l'invention ne se limite pas aux seuls modes d'exécution préférentiels décrits ci-dessus. Elle embrasse au contraire toutes les variantes possibles de réalisation.

Notamment de nombreux moyens de détection des conditions de focalisation des rayons solaires, autres que la ou les diodes électroluminescentes 3 elles-mêmes, sont envisageables, ainsi que des moyens de protection différents de ceux décrits en détail ci-dessus.

Un module optique dédié, aligné avec les modules d'émission de lumière, ayant la même ouverture et contenant un capteur à la place de la diode, est alternativement un détecteur sensible et précis.

De même, un capteur de soleil (notamment multispectral), parfois présent dans le véhicule (pour la climatisation, la détection jour/nuit, etc...) ne détecte pas directement le risque de destruction, mais permet de passer en refuge systématiquement les jours ensoleillés (le système est désactivé en roulage, les mouvements du véhicule réduisant les possibilités de destruction des LEDs).

Alternativement encore, une caméra, capteur parfois déjà présent dans le véhicule, et plus précis que le précédent, est activée au roulage. Les moyens de protection sont déclenchés quand l'image du soleil est située dans une zone critique correspondant au champ couvert par les projecteurs. De plus, l'information de localisation fournie par un dispositif GPS embarqué peut aussi dans certaines formes de réalisation de l'invention être utilisée pour optimiser la commande des moyens de protection. En effet, avec l'information de localisation du véhicule, il devient possible en consultant une base de données cartographique embarquée de déterminer des paramètres locaux spécifiques d'importance tels que par exemple l'angle d'incidence du soleil en fonction de l'heure et/ou la position relative du soleil par rapport aux lentilles des projecteurs.

Parmi les moyens mécaniques de protection des diodes 3 autres que le mouvement du module d'émission de lumière 3,4, ou de la lame plieuse 18, des caches en face avant des projecteurs, créant un style « paupière », ou des projecteurs escamotables sont aussi des variantes de réalisation de l'invention avantageuses. Pour supprimer la consommation du système en veille, la position assurant une protection contre les rayons solaires est celle où l'alimentation est coupée.

Dans d'autres modes de réalisation, l'invention tire bénéfice de moyens de protection statiques mettant en oeuvre des matériaux électrochromes passant de l'état absorbant à l'état réfléchissant en fonction du champ électrique qui leur est appliqué, tels que ceux employés pour des vitrages ou des portes.

Un projecteur à LEDs comprenant tout autre moyen de détection, ou de protection, ne sortirait pas du cadre de la présente invention dans la mesure où les caractéristiques de ce projecteur résultent des revendications ci-après.

## Revendications

1. Projecteur de véhicule automobile comprenant au moins une source lumineuse (3) **caractérisé en ce qu'**il comprend des moyens de détection (2,3) de la focalisation de rayons solaires au voisinage d'un point d'un élément du module optique et, associés auxdits moyens de détection (2,3), des moyens de protection (5,20) contre l'échauffement dudit élément du module optique par lesdits rayons solaires.

2. Projecteur de véhicule automobile selon la revendication 1, **caractérisé en ce que** ladite source lumineuse (3) est placée à un premier foyer (F) d'un premier système optique (4,17,18) destiné à former un faisceau lumineux projeté selon un premier chemin optique (R1), et **en ce que** lesdits moyens de détection (2,3) sont aptes à détecter la focalisation au voisinage dudit premier foyer (F) de rayons solaires, lesdits moyens de protection (5,20) permettant de protéger ladite source lumineuse contre l'échauffement par lesdits rayons solaires.

3. Projecteur de véhicule automobile selon la revendication 2, **caractérisé en ce que** lesdits moyens de détection (2,3) sont aptes à détecter la focalisation au voisinage dudit premier foyer (F) de rayons solaires suivant, au moins partiellement, un second chemin optique (R2) inverse dudit premier chemin optique (R1),

4. Projecteur de véhicule automobile selon l'une quelconque des revendications 1 à 3, **caractérisé en ce que** ladite source lumineuse est une diode électroluminescente (3).

5. Projecteur de véhicule automobile selon l'une quelconque des revendications 1 à 4, **caractérisé en ce que** lesdits moyens de détection (2,3) comprennent au moins une photodiode.

6. Projecteur de véhicule automobile selon la revendication 3 ou selon les revendications 3 et 4 prises en combinaison, **caractérisé en ce que** lesdits moyens de détection (2,3) comprennent une photodiode placée au voisinage de l'image dudit premier foyer (F) dans une lame semi-transparente agencée dans ledit second chemin optique (R2).

7. Projecteur de véhicule automobile selon la revendication 3 ou selon les revendications 3 et 4 prises en combinaison, **caractérisé en ce que** lesdits moyens de détection (2,3) comprennent une photodiode placée au voisinage de l'image dudit premier foyer (F) dans un réflecteur dichroïque agencé dans ledit second chemin optique (R2).

8. Projecteur de véhicule automobile selon la revendication 4, **caractérisé en ce que** lesdits moyens de détection (2,3) comprennent ladite diode électroluminescente (3).

9. Projecteur de véhicule automobile selon l'une quelconque des revendications 1 à 4, **caractérisé en ce que** lesdits moyens de détection (2,3) comprennent au moins un capteur de température.

10. Projecteur de véhicule automobile selon les revendications 4 et 9 prises en combinaison, **caractérisé en ce que** ledit capteur de température est une thermistance fixée sur le radiateur de ladite diode électroluminescente (3).

11. Projecteur de véhicule automobile selon la revendication 4 et 9 prises en combinaison, **caractérisé en ce que** ledit capteur de température est constitué par ladite diode électroluminescente (3).

12. Projecteur de véhicule automobile selon la revendication 11, **caractérisé en ce que** ladite diode électroluminescente (3) est alimentée (7) par un courant présentant une composante alternative (dl∼) de faible amplitude aux fins de mesure de la résistance dynamique de ladite diode électroluminescente (3).

13. Projecteur de véhicule automobile selon l'une quelconque des revendications 2 à 4, **caractérisé en ce que** lesdits moyens de détection comprennent un capteur agencé au voisinage du point focal d'un second système optique aligné avec ledit premier système optique (4,17,18) et ayant la même ouverture.

14. Projecteur de véhicule automobile selon l'une quelconque des revendications 1 à 4, **caractérisé en ce que** lesdits moyens de détection comprennent un capteur de soleil, de préférence multispectral

15. Projecteur de véhicule automobile selon l'une quelconque des revendications 1 à 4, **caractérisé en ce que** lesdits moyens de détection comprennent une caméra vidéo.

16. Projecteur de véhicule automobile selon l'une quelconque des revendications 1 à 15 précédentes, **caractérisé en ce que** lesdits moyens de protection (5,20) comprennent au moins un actionneur électromécanique (5,20) commandé en fonction des signaux (B,H) fournis par lesdits moyens de détection (2,3).

17. Projecteur de véhicule automobile selon la revendication 16, **caractérisé en ce que** ladite source lumineuse (3) est placée à un premier foyer (F) d'un premier système optique (4,17,18) et **en ce que** lesdits moyens de protection comprennent au voisinage dudit premier foyer (F) un cache mobile actionné par ledit actionneur.

18. Projecteur de véhicule automobile selon les revendications 2 et 16 prises en combinaison, **caractérisé en ce que** ladite source lumineuse (3) est placée à un premier foyer (F) d'un premier système optique (4,17,18) constitué par un système elliptique comportant une lame plieuse (18) actionnée par ledit actionneur (20).

19. Projecteur de véhicule automobile selon les revendications 2 et 16 prises en combinaison, **caractérisé en ce que** ladite source lumineuse (3) est placée à un premier foyer (F) d'un premier système optique (4) constitué par un module d'émission de lumière actionné par ledit actionneur (5).

20. Projecteur de véhicule automobile selon la revendication 19, **caractérisé en ce que** ledit actionneur (5) est un correcteur de portée recevant une consigne de position (P) élaborée par un calculateur de correction de portée (6) en fonction d'informations comprenant lesdits signaux fournis par lesdits moyens de détection (B,H).

21. Projecteur de véhicule automobile selon la revendication 20, **caractérisé en ce que** lesdites d'informations comprennent l'état « mis » ou « coupé » du contact (C) dudit véhicule.

22. Projecteur de véhicule automobile selon la revendication 16, **caractérisé en ce qu'**il comprend un volet agencé devant la pupille d'entrée dudit premier système optique et actionné par ledit actionneur.

23. Projecteur de véhicule automobile selon la revendication 16, **caractérisé en ce qu'**il est escamotable à l'intérieur dudit véhicule sous l'action dudit actionneur.

24. Projecteur de véhicule automobile selon l'une quelconque des revendications 3 à 15, **caractérisé en ce que** lesdits moyens de protection comprennent au moins un obturateur en matériau électrochrome agencé dans ledit second chemin optique (R2) et commandé en fonction des signaux fournis par lesdits moyens de détection (2,3).

## Claims

1. Motor vehicle headlight comprising at least one source of light (3), **characterised in that** it comprises means (2, 3) for detection of the focussing of the rays of the sun in the vicinity of a point of an element of the optical module, and, associated with the said means (2, 3) for detection, means (5, 20) for protection against heating of the said element of the optical module by the said rays of the sun.

2. Motor vehicle headlight according to claim 1, **characterised in that** the said source of light (3) is placed at a first focal point (F) of a first optical system (4, 17, 18) which is designed to form a beam of light which is projected according to a first optical path (R1), and **in that** the said means (2, 3) for detection can detect the focussing in the vicinity of the said first focal point (F) of rays of the sun, the said means (5, 20) for protection making it possible to protect the said source of light against the heating by the said rays of the sun.

3. Motor vehicle headlight according to claim 2, **characterised in that** the said means (2, 3) for detection can detect the focussing in the vicinity of the said first focal point (F) of rays of the sun according, at least partially, to a second optical path (R2) which is the inverse of the said first optical path (R1).

4. Motor vehicle headlight according to any one of claims 1 to 3, **characterised in that** the said source of light is an electroluminescent diode (3).

5. Motor vehicle headlight according to any one of claims 1 to 4, **characterised in that** the said means (2, 3) for detection comprise at least one photodiode.

6. Motor vehicle headlight according to claim 3 or according to claims 3 and 4 taken in combination, **characterised in that** the said means (2, 3) for detection comprise a photodiode which is placed in the vicinity of the image of the said first focal point (F), in a semi-transparent blade which is arranged in the said second optical path (R2).

7. Motor vehicle headlight according to claim 3 or according to claims 3 and 4 taken in combination, **characterised in that** the said means (2, 3) for detection comprise a photodiode which is placed in the vicinity of the image of the said first focal point (F), in a dichroic reflector which is arranged in the said second optical path (R2).

8. Motor vehicle headlight according to claim 4, **characterised in that** the said means (2, 3) for detection comprise the said electroluminescent diode (3).

9. Motor vehicle headlight according to any one of claims 1 to 4, **characterised in that** the said means (2, 3) for detection comprise at least one temperature sensor.

10. Motor vehicle headlight according to claims 4 and 9 taken in combination, **characterised in that** the said temperature sensor is a thermistor which is secured to the radiator of the said electroluminescent diode (3).

11. Motor vehicle headlight according to claims 4 and 9 taken in combination, **characterised in that** the said temperature sensor is constituted by the said electroluminescent diode (3).

12. Motor vehicle headlight according to claim 11, **characterised in that** the said electroluminescent diode (3) is supplied (7) by a current which has an alternative component (di∼) with a low amplitude, in order to measure the dynamic resistance of the said electroluminescent diode (3).

13. Motor vehicle headlight according to any one of claims 2 to 4, **characterised in that** the said means for detection comprise a sensor which is arranged in the vicinity of the focal point of a second optical system which is aligned with the said first optical system (4, 17, 18) and has the same opening.

14. Motor vehicle headlight according to any one of claims 1 to 4, **characterised in that** the said means for detection comprise a sun sensor, which is preferably multi-spectral.

15. Motor vehicle headlight according to any one of claims 1 to 4, **characterised in that** the said means for detection comprise a video camera.

16. Motor vehicle headlight according to any one of the preceding claims 1 to 15, **characterised in that** the said means (5, 20) for protection comprise at least one electromechanical activator (5, 20) which is controlled in accordance with the signals (B, H) supplied by the said means (2, 3) for detection.

17. Motor vehicle headlight according to claim 16, **characterised in that** the said source of light (3) is placed at a first focal point (F) of a first optical system (4, 17, 18) and **in that** the said means for protection comprise in the vicinity of the said first focal point (F) a mobile mask which is activated by the said activator.

18. Motor vehicle headlight according to claims 2 and 16 taken in combination, **characterised in that** the said source of light (3) is placed at a first focal point (F) of a first optical system (4, 17, 18) constituted by an elliptical system comprising a bendable blade (18) which is activated by the said activator (20).

19. Motor vehicle headlight according to claims 2 and 16 taken in combination, **characterised in that** the said source of light (3) is placed at a first focal point (F) of a first optical system (4) constituted by a light-emission module activated by the said activator (5).

20. Motor vehicle headlight according to claim 19, **characterised in that** the said activator (5) is a range corrector which receives a position order (P) which is processed by a range-correction computer (6) according to information comprising the said signals supplied by the said means for detection (B, H).

21. Motor vehicle headlight according to claim 20, **characterised in that** the said information comprises the state "applied" or "cut off" of the contact (C) of the said vehicle.

22. Motor vehicle headlight according to claim 16, **characterised in that** it comprises a flap which is arranged in front of the entrance pupil of the said optical system and is activated by the said activator.

23. Motor vehicle headlight according to claim 16, **characterised in that** it is retractable inside the said vehicle under the action of the said activator.

24. Motor vehicle headlight according to any one of claims 3 to 15, **characterised in that** the said means for protection comprise at least one shutter made of electrochromic material which is arranged in the said second optical path (R2) and is controlled in accordance with the signals which are supplied by the said means (2, 3) for detection.

## Patentansprüche

1. Kraftfahrzeugscheinwerfer mit wenigstens einer Lichtquelle (3),
**dadurch gekennzeichnet, dass** er Mittel (2, 3) zur Detektion der Sonnenstrahlbündelung in der Nähe eines Punktes eines Optikmoduls und den Detektionsmitteln (2, 3) zugeordnete Mittel (5, 20) zum Schutz vor Erwärmung dieses Optikmodul-Elements durch die Sonnenstrahlen umfasst.

2. Kraftfahrzeugscheinwerfer nach Anspruch 1,
**dadurch gekennzeichnet, dass** die Lichtquelle (3) in einem ersten Brennpunkt (F) eines ersten Optiksystems (4, 17, 18) zum Bilden eines Lichtstrahls angeordnet ist, welcher längs eines ersten Lichtwegs (R1) projiziert wird, und dass die Detektionsmittel (2, 3) die Sonnenstrahlbündelung in der Nähe des ersten Brennpunkts (F) festzustellen vermögen, wobei die Schutzmittel (5, 20) die Lichtquelle vor der Erwärmung durch die Sonnenstrahlen zu schützen vermögen.

3. Kraftfahrzeugscheinwerfer nach Anspruch 2,
**dadurch gekennzeichnet, dass** die Detektionsmittel (2, 3) die Sonnenstrahlbündelung in der Nähe des ersten Brennpunkts (F) wenigstens zum Teil längs eines zweiten, zum ersten Lichtweg (R1) entgegengesetzten Lichtwegs (R2) feststellen können.

4. Kraftfahrzeugscheinwerfer nach einem der Ansprüche 1 bis 3,
**dadurch gekennzeichnet, dass** die Lichtquelle eine Leuchtdiode (3) ist.

5. Kraftfahrzeugscheinwerfer nach einem der Ansprüche 1 bis 4,
**dadurch gekennzeichnet, dass** die Detektionsmittel (2, 3) wenigstens eine Photodiode umfassen.

6. Kraftfahrzeugscheinwerfer nach Anspruch 3 oder nach den Ansprüchen 3 und 4 in Verbindung miteinander,
**dadurch gekennzeichnet, dass** die Detektionsmittel (2, 3) eine Photodiode umfassen, die in der Nähe der Abbildung des ersten Brennpunkts (F) in einer im zweiten Lichtweg (R2) angeordneten semitransparenten Platte angeordnet ist.

7. Kraftfahrzeugscheinwerfer nach Anspruch 3 oder nach den Ansprüchen 3 und 4 in Verbindung miteinander,
**dadurch gekennzeichnet, dass** die Detektionsmittel (2, 3) eine Photodiode umfassen, die in der Nähe der Abbildung des ersten Brennpunkts (F) in einem im zweiten Lichtweg (R2) platzierten dichroitischen Reflektor angeordnet ist.

8. Kraftfahrzeugscheinwerfer nach Anspruch 4,
**dadurch gekennzeichnet, dass** die Detektionsmittel (2,3 ) die Leuchtdiode (3) umfassen.

9. Kraftfahrzeugscheinwerfer nach einem der Ansprüche 1 bis 4,
**dadurch gekennzeichnet, dass** die Detektionsmittel (2, 3) wenigstens einen Temperatursensor umfassen.

10. Kraftfahrzeugscheinwerfer nach den Ansprüchen 4 und 9 in Verbindung miteinander,
**dadurch gekennzeichnet, dass** der Temperatursensor ein Thermistor ist, der auf dem Wärmeableiter der Leuchtdiode (3) befestigt ist.

11. Kraftfahrzeugscheinwerfer nach Anspruch 4 und 9 in Verbindung miteinander,
**dadurch gekennzeichnet, dass** der Temperatursensor durch die Leuchtdiode (3) gebildet ist.

12. Kraftfahrzeugscheinwerfer nach Anspruch 11,
**dadurch gekennzeichnet, dass** die Leuchtdiode (3) zur Messung des dynamischen Widerstands der Leuchtdiode (3) von einem Strom gespeist (7) wird, der eine Wechselstromkomponente (dl∼) mit kleiner Amplitude aufweist.

13. Kraftfahrzeugscheinwerfer nach einem der Ansprüche 2 bis 4,
**dadurch gekennzeichnet, dass** die Detektionsmittel einen Sensor umfassen, der in der Nähe des Brennpunkts eines mit dem ersten Optiksystem (4, 17, 18) in einer Reihe angeordneten zweiten Optiksystems angeordnet ist, das den gleichen Öffnungswinkel hat.

14. Kraftfahrzeugscheinwerfer nach einem der Ansprüche 1 bis 4,
**dadurch gekennzeichnet, dass** die Detektionsmittel einen vorzugsweise multispektralen Sonnensensor umfassen.

15. Kraftfahrzeugscheinwerfer nach einem der Ansprüche 1 bis 4,
**dadurch gekennzeichnet, dass** die Detektionsmittel eine Videokamera umfassen.

16. Kraftfahrzeugscheinwerfer nach einem der vorhergehenden Ansprüche 1 bis 15,
**dadurch gekennzeichnet, dass** die Schutzmittel (5, 20) wenigstens ein elektromagnetisches Stellglied (5, 20) umfassen, das in Abhängigkeit von den durch die Detektionsmittel (2, 3) gelieferten Signalen (B, H) gesteuert wird.

17. Kraftfahrzeugscheinwerfer nach Anspruch 16,
**dadurch gekennzeichnet, dass** die Lichtquelle (3) in einem ersten Brennpunkt (F) eines ersten Optiksystems (4, 17, 18) angeordnet ist, und dass die Schutzmittel in der Nähe des ersten Brennpunkts (F) eine durch das Stellglied betätigte bewegliche Blende umfassen.

18. Kraftfahrzeugscheinwerfer nach den Ansprüchen 2 und 16 in Verbindung miteinander,
**dadurch gekennzeichnet, dass** die Lichtquelle (3) in einem ersten Brennpunkt (F) eines ersten Optiksystems (4, 17, 18) angeordnet ist, das durch ein Ellipsoid-System gebildet ist, welches eine durch das Stellglied (20) betätigte Ablenkplatte (18) umfasst.

19. Kraftfahrzeugscheinwerfer nach den Ansprüchen 2 und 16 in Verbindung miteinander,
**dadurch gekennzeichnet, dass** die Lichtquelle (3) in einem ersten Brennpunkt (F) eines ersten Optiksystems (4) angeordnet ist, das von einem durch das Stellglied (5) betätigten Lichtemissionsmodul gebildet ist.

20. Kraftfahrzeugscheinwerfer nach Anspruch 19,
**dadurch gekennzeichnet, dass** das Stellglied (5) ein Leuchtweitensteller ist, an den ein Positionssollwert (P) übermittelt wird, der durch einen Rechner (6) zur Leuchtweitenregelung in Abhängigkeit von Informationen erstellt wird, die die von den Detektionsmitteln (B, H) gelieferten Signale umfassen.

21. Kraftfahrzeugscheinwerfer nach Anspruch 20,
**dadurch gekennzeichnet, dass** die Informationen den Zustand "eingeschaltet" oder "ausgeschaltet" des Kontakts (C) des Fahrzeugs umfassen.

22. Kraftfahrzeugscheinwerfer nach Anspruch 16,
**dadurch gekennzeichnet, dass** er eine vor der Eintrittspupille des ersten Optiksystems angeordnete und durch das Stellglied betätigte Klappe umfasst.

23. Kraftfahrzeugscheinwerfer nach Anspruch 16,
**dadurch gekennzeichnet, dass** er unter der Einwirkung des Stellglieds in das Innere des Fahrzeugs wegklappbar ist.

24. Kraftfahrzeugscheinwerfer nach einem der Ansprüche 3 bis 15,
**dadurch gekennzeichnet, dass** die Schutzmittel wenigstens einen Verschluss aus elektrochromem Werkstoff umfassen, der im zweiten Lichtweg (R2) angeordnet und in Abhängigkeit von den durch die Detektionsmittel (2, 3) gelieferten Signalen gesteuert ist.
